(19) Europäisches Patentamt
European Patent Office
Office européen des brevets

(11) **EP 4 105 594 B1**

(12) **EUROPÄISCHE PATENTSCHRIFT**

(45) Veröffentlichungstag und Bekanntmachung des Hinweises auf die Patenterteilung:
**06.08.2025 Patentblatt 2025/32**

(21) Anmeldenummer: **22179218.7**

(22) Anmeldetag: **15.06.2022**

(51) Internationale Patentklassifikation (IPC):
**G01B 3/02** (2020.01)  **G01B 3/00** (2006.01)
**G01B 11/02** (2006.01)  **G01M 11/02** (2006.01)
**G02B 21/24** (2006.01)

(52) Gemeinsame Patentklassifikation (CPC):
**G01B 3/02; G01B 3/004; G01B 11/02;**
**G01M 11/0207; G02B 21/24**

(54) **MESSVORRICHTUNG UND VERFAHREN ZUM BESTIMMEN EINER SCHÄRFENTIEFE EINES OPTISCHEN AUFBAUS**

MEASURING APPARATUS AND METHOD FOR DETERMINING A DEPTH OF FOCUS OF AN OPTICAL STRUCTURE

DISPOSITIF DE MESURE ET PROCÉDÉ DE DÉTERMINATION D'UNE PROFONDEUR DE CHAMP D'UNE STRUCTURE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2021 DE 102021206221**

(43) Veröffentlichungstag der Anmeldung:
**21.12.2022 Patentblatt 2022/51**

(73) Patentinhaber: **Universität Stuttgart**
**70174 Stuttgart (DE)**

(72) Erfinder:
• **FOLTYN, Patrick**
**70569 Stuttgart (DE)**
• **WEIGAND, Bernhard**
**70569 Stuttgart (DE)**
• **ROTH, Norbert**
**72469 Meßstetten (DE)**

(74) Vertreter: **Müller-Boré & Partner**
**Patentanwälte PartG mbB**
**Friedenheimer Brücke 21**
**80639 München (DE)**

(56) Entgegenhaltungen:
**DE-A1- 102015 113 557     US-A1- 2007 279 621**

**Beschreibung**

Die vorliegende Erfindung betrifft eine Vorrichtung zum Bestimmen der Schärfentiefe eines optischen Aufbaus, insbesondere von optischen Mikroskopen.

Die Bestimmung der Schärfentiefe eines optischen Aufbaus wie z.B. eines optischen Mikroskops ist in vielen optischen Untersuchungen, z.B. in der Biologie, Metallurgie, Verfahrenstechnik oder in experimentellen Aufbauten von äußerster Wichtigkeit. Hierbei kann man darüber Aufschluss bekommen, wie groß der Tiefenbereich ist, bei dem man ein akzeptabel fokussiertes Bild in den Untersuchungen erwarten, kann. Dies ist unter anderem wichtig, wenn das zu messende Objekt nicht einfach und deterministisch im optischen Aufbau bzw. vor einem Objektiv des optischen Aufbaus zu platzieren ist, wenn die zu beobachtenden Objekte auch in die Tiefe ausgedehnt sind, oder sich (schnell) bewegen können. Als Beispiel sind hier Untersuchungen von Tropfensprays oder des Tropfenaufpralls auf Oberflächen zu nennen, sowie die Untersuchung und das Verfolgen von Partikeln und Organsimen in Mikrokanalströmungen. Bei diesen Anwendungen sind Auto- und Multifokusverfahren mittels Verfahren eines Sensors, einer Linse oder mit Hilfe von Flüssigkeitslinsen meistens aufgrund der Geschwindigkeit der Fokussiermethode nicht realisierbar.

In manchen Fällen, vor allem bei sehr teuren Mikroskopen, kann über einen sehr präzisen Verschiebemechanismus, ein einfaches Kalibrierobjekt, z.B. ein Strichmuster, in der Tiefe verschoben werden. Der obere und untere Verschiebungspunkt, bei dem die Schärfe der Kalibriermuster gerade noch akzeptabel sind, definieren den Bereich der Schärfentiefe.

Darüber hinaus kann die Schärfentiefe (Depth of Field, *DOF*) auch rechnerisch ermittelt werden, siehe z.B.: Merklinger, H. M: The INs and OUTs of FOCUS (v1.03e).

Published by the author. S. 13 ff. (2002) ISBN 0-9695025-0-8, wobei sich die Tiefe aus der Differenz der beiden Abstände $D_1$ und $D_2$ ergibt:

$$DOF = D_2 - D_1 \qquad\qquad (1)$$

mit:

$$D_1 = \frac{f^2 D + gfD - gf^2}{f^2 - gf + gD} \qquad\qquad (2)$$

$$D_2 = \frac{f^2 D - gfD + gf^2}{f^2 + gf - gD} \qquad\qquad (3)$$

$$g = Na \qquad\qquad (4)$$

Hierbei entspricht $D_1$ der Entfernung der Linse zum Nahpunkt und $D_2$ zum Fernpunkt auf der Objektseite, bei zuvor festgelegten, akzeptierten Durchmesser *a* des Zerstreuungskreises. Als weitere Konstanten gehen in die Gleichungen die Brennweite *f*, die Blendenzahl *N* und der Abstand des Fokuspunktes *D* vor der Linse ein. Da optische Systeme im wissenschaftlichen Bereich teilweise die eindeutige Definition der Parameter nicht so leicht zulassen, ist eine experimentelle Bestimmung der Schärfentiefe oft nahezu unerlässlich.

Ferner beschreibt die Druckschrift US 2007/279621 A1 einen Aufbau für die direkte Messung eines vertikalen Intensitätsprofils durch eine Fokusebene entlang eines Beleuchtungsstrahls, eine Bestimmung der Tiefe der Fokusebene und einer maximalen Intensität des Intensitätsprofils. Der Aufbau umfasst eine Vielzahl von Fokussierungsindikatoren, die relativ zu einem Substrat befestigt sind, wobei die Fokussierungsindikatoren an verschiedenen Stellen entlang des Beleuchtungsstrahls verteilt sind. Die Fokussierungsindikatoren sind so konfiguriert, dass sie mit einer Intensität beleuchtet werden, die der Position relativ zur Fokusebene entlang der Achse des Beleuchtungsstrahls entspricht. Die Lage der jeweiligen Fokussiermarken kann vorgegeben sein, z. B. entlang einer bestimmten Skala bei einer bestimmten Neigung der Skala und dem Verlauf des Beleuchtungsstrahls, oder zunächst nicht bekannt sein und nachträglich bestimmt werden.

Es ist daher Aufgabe der Erfindung die experimentelle Bestimmung der Schärfentiefe eines optischen Aufbaus zu vereinfachen und in der Genauigkeit zu verbessern. Diese Aufgabe wird durch eine Vorrichtung mit den in dem unabhängigen Anspruch angegebenen Merkmalen gelöst. Bevorzugte Ausführungsformen sind Gegenstand der abhängigen Ansprüche.

Somit betrifft die Erfindung in einem Aspekt insbesondere eine Messvorrichtung zum Bestimmen einer Schärfentiefe eines optischen Aufbaus, insbesondere eines Lichtmikroskops. Dazu umfasst die Messvorrichtung einen Vorrichtungskörper mit einer Messachse, wobei der Vorrichtungskörper so gebildet ist, dass er in einer Messposition standfest auf einer objektseitigen Ablageebene (insbesondere einer Objektträgerebene) des optischen Aufbaus derart abstellbar ist, dass dabei die Messachse des Vorrichtungskörpers mit einer (objektseitigen) optischen Achse des optischen Aufbaus zusammenfällt. Insbesondere weist der Vorrichtungskörper dazu vorzugsweise eine Grundfläche auf, die zum Abstellen der Messvorrichtung im optischen Aufbau in der Messposition dient. Durch das standfeste Abstellen, kann die Messvorrichtung für eine genaue Messung der Schärfentiefe reproduzierbar in die Messposition gebracht werden.

Um eine Messung der Schärfentiefe durchführen zu können, weist der Vorrichtungskörper eine entlang einer Skalenlinie aufgetragene Messskala derart auf, dass die Skalenlinie mit der Richtung der Messachse einen Skalenwinkel $\varphi$ größer als 0° (vorzugsweise zumindest etwa 10°, weiter bevorzugt zumindest etwa 20°, noch weiter bevorzugt zumindest etwa 30°) und kleiner als 90° (vorzugsweise nicht mehr als etwa 80°, weiter bevorzugt nicht mehr als etwa 70°, noch weiter bevorzugt nicht mehr als etwa 60°) einschließt und die Messskala in der Messposition des Vorrichtungskörper durch den optischen Aufbau für die Bestimmung der Schärfentiefe optisch erfassbar ist. Mit anderen Worten ist in der Messposition der Messvorrichtung bzw. des Messkörpers die Messskala durch den optischen Aufbau sichtbar und ablesbar. Dazu ist der Vorrichtungskörper vorzugsweise zumindest teilweise entlang der Messachse optisch transparent. Dies kann dadurch erreicht werden, dass der Vorrichtungskörper im optischen transparenten Bereich offen ist bzw. eine Öffnung aufweist oder aber dadurch dass das Volumenmaterial des Vorrichtungskörpers in diesem Bereich optisch transparent ist, z.B. in Form von Glas. Insbesondere kann der Vorrichtungskörper Glas umfassen oder im Wesentlichen aus Glas bestehen.

Die Messposition legt somit die Position der Messvorrichtung relativ zum optischen Aufbau bzw. innerhalb des optischen Aufbaus fest, in der die Bestimmung der Schärfentiefe durchführbar ist. Insbesondere ist die Messposition durch einen objektseitigen Fokalpunkt des optischen Aufbaus bestimmt, also den Bereich, in dem ein zu untersuchendes Objekt durch den optischen Aufbau scharf abgebildet wird. Dabei ist die Messvorrichtung derart ausgebildet, dass der objektseitige Fokalpunkt des optischen Aufbaus im Bereich der Skalenlinie liegt, wenn sich die Messvorrichtung in der Messposition befindet. Die Skalenlinie kann dabei eine optisch nicht separat markierte Linie darstellen, die (lediglich) den Verlauf der Messskala beschreibt. In einer bevorzugten Ausführungsform kann die Skalenlinie aber auch als optisch sichtbare (durchgängige oder teilweise unterbrochene) Linie (beispielsweise als Bestandteil der Messskala) ausgebildet sein.

Durch die Anordnung der Messskala unter einem Winkel (als schräg) relativ zur optischen Achse des optischen Aufbaus, erstreckt sich die Messskala gleichzeitig in einer axialen Richtungskomponente des optischen Aufbaus und in einer lateralen Richtung. Damit durchläuft die Messskala (aufgrund eines axialen Verlaufs entlang der Skalenlinie) insbesondere den gesamten Schärfebereich des optischen Aufbaus, also insbesondere zwischen einer Nahgrenze und einer Ferngrenze des Schärfebereichs. Gleichzeitig kann die Messskala (aufgrund eines lateralen Verlaufs entlang der Skalenlinie) durch den optischen Aufbau abgelesen und ausgewertet werden. Damit kann sehr genau und gut reproduzierbar, aus einer einzigen, momentanen Abbildung der Messskala durch den optischen Aufbau (z.B. durch einen einzigen Blick oder eine einzige Momentaufnahme) die Schärfentiefe abgelesen werden. Insbesondere ist es somit nicht notwendig, zum Zweck der Messung der Schärfentiefe die Fokalebene des optischen Aufbaus zu verschieben.

Weiter umfasst der Vorrichtungskörper einen optisch transparenten Block oder er kann bevorzugt von einem solchen optisch transparenten Block gebildet werden, in dessen Inneren die Messskala ausgebildet ist. Als optisch transparent wird der Vorrichtungskörper bzw. der optisch transparente Block insbesondere dann angesehen, wenn Licht in zumindest einem Messwellenlängenbereich (welcher insbesondere als Wellenlängenbereich einer optischen Messung mittels des optischen Aufbaus genutzt wird), das von der Messskala ausläuft, zu einem Anteil von zumindest 50%, vorzugsweise zumindest 75%, noch mehr bevorzugt zumindest 90%, am meisten bevorzugt zumindest 95% der Lichtleistung die Messvorrichtung in Richtung der Messachse (zum optischen Aufbau hin) verlässt. Besonders bevorzugt liegt dabei die Messwellenlänge im sichtbaren Bereich, insbesondere in einem Bereich von etwa 380 nm bis 780 nm. In einer bevorzugten Ausführungsform umfasst der optisch transparente Block Glas bzw. er ist vorzugsweise im Wesentlichen aus Glas gebildet. Als bevorzugtes Glasmaterial kommt beispielsweise Kalk-Natron-Glas in Betracht. In einem weiteren Aspekt kommt insbesondere Schott-Glas N-BK7 ® in Betracht.

Der Vorrichtungskörper ist somit insbesondere mit einem optischen transparenten Block mit der Grundfläche, einer Lichtaustrittsfläche und der zur Grundfläche und zur Lichtaustrittsfläche senkrechten Messachse so gebildet, dass der Vorrichtungskörper in der Messposition mit der Grundfläche standfest auf der Ablageebene des optischen Aufbaus derart abstellbar ist, dass dabei die Messachse des Vorrichtungskörpers mit der optischen Achse des optischen Aufbaus zusammenfällt, wobei der Vorrichtungskörper im Inneren des optisch transparenten Blocks die entlang der Skalenlinie aufgetragene Messskala derart aufweist, dass die Skalenlinie mit der Richtung des Messachse den besagten Skalenwinkel einschließt und die Messskala in der Messposition des Vorrichtungskörpers durch den optischen Aufbau für die Bestimmung der Schärfentiefe optisch erfassbar ist, indem das vom optischen Aufbau erfasste Licht von der Messskala durch die Lichtaustrittsfläche hindurchtritt.

Der optisch transparente Block ist als ein vorzugsweise gerades, insbesondere vierseitiges Prisma, besonders bevorzugt als Würfel gebildet. Dies ist besonders dann bevorzugt und sehr nützlich, wenn die Ablageebene des optischen Aufbaus senkrecht zu dessen (objektseitiger) optischen Achse liegt, und wenn die Messachse der Messvorrichtung senkrecht zu einer Grundfläche des Prismas liegt. Damit lässt sich sicherstellen, dass das von der Messskala auslaufende Licht den Vorrichtungskörpern, insbesondere den optisch transparenten Block in Richtung des optischen Aufbaus im Wesentlichen symmetrisch verlässt, wodurch ein möglichst verzerrungsfreies und damit fehlerarmes Ablesen und Auswerten der Schärfedarstellung der Messskala erreicht wird.

Zusätzlich oder alternativ ist der optisch transparente Block als Objektträger, insbesondere als Objektmikrometer ausgebildet. Dabei wird als Objektträger ein Träger angesehen, auf dem kleine Gegenstände (Objekte) mikroskopisch, insbesondere lichtmikroskopisch betrachtet werden (können). Solche Objektträger sind in der Größe und den Materialien konventionell erhältlich, wobei sie als Objektträger für die Lichtmikroskopie oft aus einer Glasplatte (auch Tragglas) der Größe 76 mm × 26 mm (DIN ISO 8037-1) bestehen, und auch in dieser Größe für den transparenten Block in einer bevorzugten Ausführungsform der Erfindung zum Einsatz kommt. Alternativ sind auch die Größen 76 mm × 52 mm, 76 mm × 51 mm, 76 mm × 38 mm, 76 mm × 25 mm, 48 mm × 28 mm und/oder 46 mm × 27 mm bevorzugt. Dabei kommen als Objektträgerdicke vorzugsweise Werte im Bereich von etwa 0,5 mm bis etwa 3 mm, besonders bevorzugt bis etwa 2 mm, am meisten bevorzugt im Bereich von etwa 1 mm bis etwa 1,5 mm zum Einsatz. In der Ausführungsform als Objektmikrometer ist im bzw. am Objektträger zusätzlich eine (laterale bzw. flache) Mikrometerskala vorgesehen, die insbesondere zusätzlich zur Messskala, welche der Messung der Schärfentiefe dient, vorgesehen ist und insbesondere senkrecht zur Messachse verläuft.

Weiter verläuft die Skalenlinie entlang einer Geraden, welche mit einer Normalenrichtung zu einer Grundfläche des transparenten Blocks (insbesondere des Prismas) den Skalenwinkel $\varphi$ einschließt, der vorzugsweise in einem Bereich von etwa 30° bis etwa 60°, besonders bevorzugt in einem Bereich von etwa 40° bis etwa 50°, am meisten bevorzugt bei etwa 45° liegt. Die Messskala markiert bei einem optischen Brechungsindex n des optisch transparenten Blocks periodische Abstände d entlang der Skalenlinie gemäß

$$d = n10^{-m}L/\cos\varphi \qquad\qquad (5)$$

mit einer ganzen Zahl m als dekadische Vielfache einer standardisierten Längeneinheit L, wobei die Längeneinheit 1 Meter gemäß dem internationalen Einheitensystem SI beträgt. Bei dieser Skalierung entsprechen die periodischen Abstände im Wesentlichen äquivalenten axialen Abständen $d'_a = 10^{-m}L$ im Vakuum (oder näherungsweise in Luft). Sie stellen damit ein unmittelbares Maß für die Schärfentiefe in Vakuum oder Luft in der standardisierten Längeneinheit $L$ bzw. in einer dekadischen Vielfachen davon dar. Damit lässt sich die effektive Schärfentiefe des optischen Aufbaus in Luft oder Vakuum direkt und einfach ablesen. Beispielsweise bei $L = 1\,m$ und $m = 6$ lässt sich die Schärfentiefe in Einheiten von $\mu$m ablesen. Dabei ist es natürlich möglich, dass die Messskala zusätzlich zu diesen periodischen Abständen $d$ noch periodische Unterteilungen dieser Abstände in beispielsweise 2 oder 5 gleiche Unterabschnitte markiert. Besondere bevorzugt umfasst die Messskala eine numerische Beschriftung, welche das Ablesen bzw. Durchzählen der markierten periodischen Abstände wesentlich vereinfacht.

Diese Skalierung ist dem Grunde nach auch dann anwendbar, wenn der Vorrichtungskörper zumindest im Bereich zwischen der Messskala und dem Objektiv des optischen Aufbaus offen ist oder zumindest die Messskala selbst nicht von einem optischen Medium wie beispielsweise Glas bedeckt ist. In diesem Fall ist als Brechungsindex n der Brechungsindex des umgebenden Mediums (z.B. Luft bzw. etwa 1) anzusetzen.

In einer besonders bevorzugten Ausführungsform ist die Messskala als Laserinnengravur gebildet. Die Technik der Laserinnengravur ist insbesondere für Glas etabliert und lässt sich im Rahmen der vorliegenden Erfindung sehr effizient anwenden. Damit ist die Messskala im Vorrichtungskörper besonders geschützt und wird während der Benutzung nicht beschädigt.

Als Alternative zu dem oberhalb beschriebenen Aspekt wird im Folgenden ein Messverfahren zum Bestimmen einer Schärfentiefe eines optischen Aufbaus beschrieben, welches das technische Problem lösen und zum Verständnis der beanspruchten Erfindung beitragen kann. Das Verfahren umfasst dabei zunächst ein Bereitstellen eines optisch streuenden Mediums in einem Messbereich um den objektseitigen Fokalpunkt des optischen Aufbaus, also dort wo die Schärfentiefe des optischen Aufbaus gemessen werden soll. Vorzugsweise umfasst das Bereitstellen eines optisch streuenden Mediums ein Einbringen von Nebel und/oder Rauch in den Messbereich um den objektseitigen Fokalpunkt des optischen Aufbaus.

Außerdem umfasst das Verfahren ein Projizieren einer Messskala entlang einer Skalenlinie innerhalb des Messbereichs derart, dass die Skalenlinie mit der Richtung der objektseitigen optischen Achse des optischen Aufbaus einen Skalenwinkel $\varphi$ größer als 0° (vorzugsweise zumindest etwa 10°, weiter bevorzugt zumindest etwa 20°, noch weiter bevorzugt zumindest etwa 30°) und kleiner als 90° (vorzugsweise nicht mehr als etwa 80°, weiter bevorzugt nicht mehr als etwa 70°, noch weiter bevorzugt nicht mehr als etwa 60°) einschließt und die Messskala durch den optischen Aufbau für die Bestimmung der Schärfentiefe optisch erfassbar ist. Insbesondere wird die Messskala durch die Lichtstreuung am optisch streuenden Medium für den optischen Aufbau erfassbar. Dabei wird die Messskala insbesondere als 3-dimen

sionale Licht- bzw. Laser-Projektion nach Art eines Hologramms in den Messbereich projiziert, wobei das Licht am optisch streuenden Medium gestreut und vom optischen Aufbau erfasst wird. Dabei ist das optisch streuende Medium vorzugsweise nur so dicht, dass es zwar zu einer ausreichenden Streuung des projizierten Lichts im Bereich der projizierten Messskala führt, dass das die Messskala darstellende gestreute Licht aber zum überwiegenden Teil noch außerhalb des Messbereichs für den optischen Aufbau erfassbar sein lässt. Der überwiegende Teil des Lichts der projizierten Messskala soll also vorzugsweise ohne weitere Streuung vom optischen Aufbau erfassbar sein. Schließlich umfasst das Verfahren ein Erfassen der Grenzen des im Rahmen eines Toleranzkriteriums durch den optischen Aufbau als scharf abgebildeten Bereichs der projizierten Messskala. Diese Grenzen stellen insbesondere die Nahgrenze und die Ferngrenze des Schärfenbereichs dar und werden dadurch identifiziert, dass dort die Messskala selbst von einem unscharfen in einen scharfen Bereich (bzw. umgekehrt) übergeht. Für die Struktur der Messskala (insbesondere die Richtung, die Form, die Größe, die Einteilung usw.) gelten im Verfahren vorzugsweise die analogen Merkmale zur hier beschriebenen Messvorrichtung.

Besonders bevorzugt findet das Verfahren insbesondere in einer der hier beschriebenen bevorzugten Ausführungsformen Anwendung einem Aufbau zur Strömungsmessung in zumindest einem Strömungskanal, wobei der Messbereich zumindest teilweise innerhalb des zumindest einen Strömungskanals liegt. In einer solchen Anwendung kann das optisch streuende Medium, welches der Messung der Schärfentiefe dient, gleichzeitig ein Medium sein, dessen Strömungsverhalten ermittelt werden soll oder welches zum Ermitteln des Strömungsverlaufs eines Trägermediums genutzt wird. Eine besondere bevorzugte Anwendung ist eine PIV-Messung (particle image velocimetry).

Die Erfindung wird nachfolgend anhand bevorzugter Ausführungsformen mit Bezug auf die beigefügten Figuren beispielhaft beschrieben. Dabei zeigt:

Fig. 1 eine schematische Gegenüberstellung einer herkömmlichen Messung einer Schärfentiefe (Fig. 1A) und einer erfindungsgemäßen Messung einer Schärfentiefe (Fig. 1B) eines optischen Aufbaus;

Fig. 2 eine Messvorrichtung gemäß einer bevorzugten Ausführungsform der vorliegenden Erfindung;

Fig. 3 eine beispielhafte Messskala, welche in einer Messvorrichtung oder einem Verfahren gemäß einer bevorzugte Ausführungsform der Erfindung Einsatz finden kann;

Fig. 4 die Darstellung einer Aufnahme einer Messskala in der Bildfläche eines optischen Aufbaus;

Fig. 5 - 6 weitere Messvorrichtungen gemäß bevorzugter Ausführungsformen der vorliegenden Erfindung; und

Fig. 7 geometrische Darstellungen zur Veranschaulichung von Messfehlern.

Insbesondere soweit in den teilweise getrennt beschriebenen Ausführungsformen die gleichen Bezugszeichen verwendet werden, sind entsprechende Ausführungen zu den jeweilen Komponenten, Strukturen und Funktionen vorzugsweise auch in den jeweils anderen Ausführungsformen anwendbar.

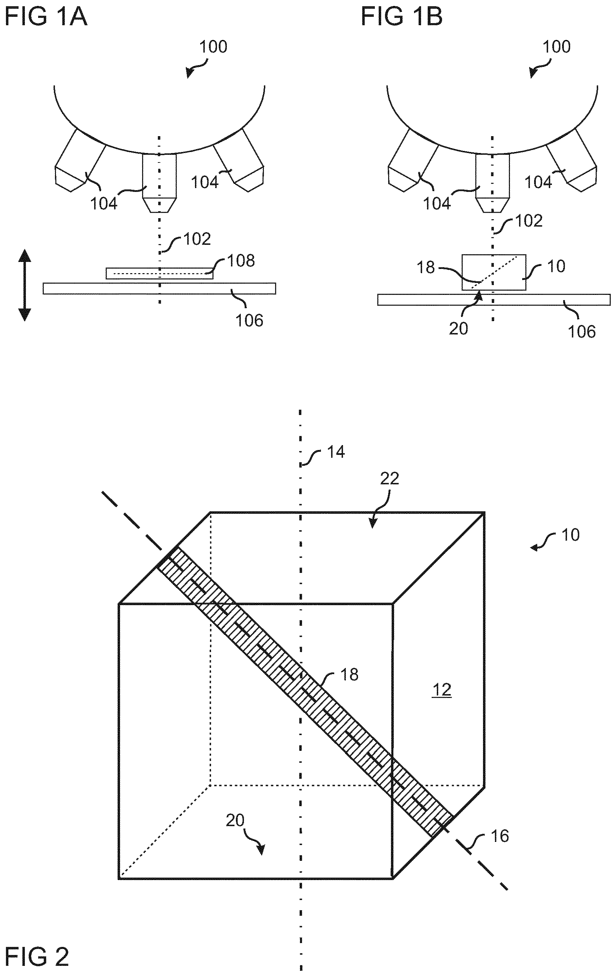

Fig. 1A veranschaulicht eine herkömmliche Vorgehensweise bei der Bestimmung der Schärfentiefe eines optischen Aufbaus 100. In dem dargestellten Beispiel betrifft der optische Aufbau ein Lichtmikroskop mit mehrere Wechselobjektiven 104, welche in einem Objektivrevolver montiert sind. Das jeweils aktive Objektiv 104 legt eine (objektseitige) optische Achse 102 des optischen Aufbaus 100 fest. Für die Mikroskopie eines Objekts wird dieses auf einer Objektträgereinrichtung 106 des optischen Aufbaus positioniert, insbesondere abgelegt. Um nun die Schärfentiefe des optischen Aufbaus zu ermitteln, wird herkömmlich beispielsweise ein konventionelles Kalibriermuster 108 auf der Objektträgereinrichtung 106 derart platziert, dass das Kalibriermuster 108 im Wesentlichen parallel zu einer Fokalebene des optischen Aufbaus 100 liegt. Durch Verschieben der Objektträgereinrichtung 106 parallel zu optischen Achse 102 kann das Kalibriermuster 108 in die Fokalebene des optischen Aufbaus 100 gebracht werden, wo es durch den optischen Aufbau (im Rahmen dessen optischer Auflösung) scharf abgebildet wird. Eine im Rahmen einer vorgegebenen bzw. gewünschten Toleranz noch ausreichende Abbildungsschärfe wird auch noch in einer Umgebung der Fokalebene erreicht. Die axiale Ausdehnung dieser Umgebung entlang der optischen Achse 102 wird als Schärfentiefe betrachtet. Um diese Schärfentiefe zu bestimmen, wird herkömmlich das Kalibriermuster 108 mittels der Objektträgereinrichtung 106 zwischen den beiden Schärfegrenzen (einer Nahgrenze und einer Ferngrenze, jeweils diesseits bzw. jenseits der Fokalebene) verschoben und der dafür nötige axiale Verschiebeweg wird ermittelt. Dies wird üblicherweise von einem Benutzer durchgeführt, der den jeweiligen Schärfeeindruck an der Nah- bzw. Ferngrenze beurteilt und damit die jeweilige Position an der Nah- bzw. Ferngrenze nacheinander bestimmt. Da die beiden Positionen nacheinander angefahren werden, können die beiden Schärfeeindrücke nicht unmittelbar nebeneinander verglichen werden, so dass es hierbei zu einer leicht unterschiedlichen Einstellung der Schärfe kommen kann. Außerdem ist für diese Vorgehensweise eine entsprechend genaue Kalibrierung des axialen Verschiebewegs der Objektträgereinrichtung erforderlich.

Fig. 1B veranschaulicht im Vergleich dazu eine bevorzugte Ausführungsform einer erfindungsgemäßen Vorgehensweise für denselben optischen Aufbau 100. Dazu wird anstelle eines herkömmlichen Kalibriermusters 108 auf die Objektträgereinrichtung 106 eine Messvorrichtung 10 gemäß einer bevorzugten Ausführungsform der vorliegenden Erfindung platziert. Insbesondere wird diese Messvorrichtung 10 mittels einer Grundfläche auf der Objektträgereinrichtung 106 standfest derart abgestellt, dass eine Messachse der Messvorrichtung im Wesentlichen mit der optischen Achse 102 des optischen Aufbaus 100 zusammenfällt. In der dargestellten Ausführungsform umfasst die Messvorrichtung einen quaderförmigen Vorrichtungskörper (Block), innerhalb dessen eine Messskala 18 derart schräg bzw. diagonal ausgebildet ist, dass die Messskala entlang einer Skalenlinie (vorzugsweise einer Geraden) verläuft, wobei die Skalenlinie mit der Richtung der Messachse (also mit der Richtung der optischen Achse 102) einen Skalenwinkel $\varphi$ größer als 0° und kleiner als 90° einschließt. Außerdem ist der Vorrichtungskörper (Block) insbesondere derart transparent, dass die Messskala über das aktivierte Objektiv 104 betrachtet werden kann. Nun wird die Objektträgereinrichtung 106 vorzugsweise derart positioniert, dass die Skalenlinie der Messvorrichtung die Fokalebene des optischen Aufbaus 100 im Bereich der optischen Achse 102 schneidet. Mit anderen Worten tritt die Messskala 18 vorzugsweise im Bereich der Messachse (also im Bereich der optischen Achse 102) durch die Fokalebene des optischen Aufbaus 102 - und zwar derart, dass sie noch innerhalb eines Sehfeldes des optischen Aufbaus auch sowohl durch die Nahgrenze als auch durch die Ferngrenze des Schärfebereichs des optischen Aufbaus tritt. Dies kann insbesondere dadurch erreicht werden, dass der Skalenwinkel $\varphi$ klein genug gewählt wird, also vorzugsweise nicht größer als etwa 65°. Umgekehrt ist es vorteilhaft, wenn der Skalenwinkel $\varphi$ nicht zu klein gewählt wird, da ansonsten die Durchtrittspunkte der Messskala bzw. der Skalenlinie durch die Nah- und Ferngrenze des Schärfebereichs innerhalb des Sehfeldes so nah beisammen liegen, dass das Ablesen schwierig ist, was dann auch die Zuverlässigkeit der Auswertung und damit die erreichbare Genauigkeit beeinträchtigen kann. Vorzugsweise ist damit der Skalenwinkel $\varphi$ nicht kleiner als etwa 25°.

Mit einer erfindungsgemäßen Vorgehensweise kann somit nach einmaliger Positionierung der Messvorrichtung mit einem einzigen Blick oder anhand einer einzigen Bildaufnahme eine Auswertung der Schärfentiefe vorgenommen werden, ohne dass währenddessen bzw. zwischendurch eine Verschiebung eines Kalibriermusters vorgenommen werden muss.

Fig. 2 zeigt schematisch eine perspektivische Darstellung einer Messvorrichtung 10 gemäß einer bevorzugten Ausführungsform der Erfindung. In dieser Ausführungsform besteht die Messvorrichtung 10 im Wesentlichen aus einem vorzugsweise gläsernen, würfelförmigen Vorrichtungskörper 12, in dessen Innerem entlang einer diagonalen Skalenlinie 16 eine entsprechende Messskala 18 eingebettet ist. Vorzugsweise verläuft die Skalenlinie 16 in diesem Fall als Gerade zwischen den Mittelpunkten zweier diagonal gegenüberliegenden Würfelkanten. Vorzugsweise liegt die Messskala 18 dabei innerhalb einer Ebene, die durch die beiden diagonal gegenüberliegenden Würfelkanten aufgespannt wird. Die Messskala 18 markiert dabei Positionen und Abstände in zumindest einer Richtung parallel zu Skalenlinie. Eine beispielhafte Ausgestaltung einer solchen Messskala wird nachfolgend noch dargestellt.

Für die Anwendung dieser Messvorrichtung 10 kann der Würfel mit einer Seitenfläche, der Grundfläche 20, standfest abgestellt werden. Dies kommt insbesondere dann in Frage, wenn die objektseitige optische Achse des zu vermessenden optischen Aufbaus vertikal verläuft. Dabei bildet beispielsweise die Mittelsenkrechte zur Grundfläche eine Messachse 14 der Messvorrichtung 10, die mit der genannten optischen Achse des optischen Aufbaus in Übereinstimmung gebracht werden kann. Dadurch kann die Messskala 18 entlang der Messachse vom Messaufbau derart optisch erfasst werden, dass das vom optischen Aufbau erfasste Licht von der Messskala im Wesentlichen symmetrisch um die Messachse durch eine Lichtaustrittsfläche 22 des Vorrichtungskörpers 12 hindurchtritt. Da die Messachse 14 in einem Vorrichtungskörper mit prismatischer Form (insbesondere in Form eines geraden Prismas), insbesondere in einem Würfel, genau dann, wenn sie senkrecht zur Grundfläche 20 steht, auch senkrecht zur Lichtaustrittsfläche 22 steht, werden Verfälschungen der Messungen durch die Lichtbrechung an der Lichtaustrittsfläche minimiert.

Als Material des Vorrichtungskörper 12 wird vorzugsweise ein im Bereich des sichtbaren Lichts transparentes, formfestes Material verwendet. Hierfür eignet sich beispielsweise Glas. Die Messskala kann dabei beispielsweise durch eine laserinduzierte Glasinnengravur erzeugt werden. Dabei lässt sich sowohl der Glaswürfel selbst mit sehr hoher Qualität bezüglich der Materialhomogenität, der Oberflächenplanarität und der Winkel herstellen. Außerdem ist Glas mechanisch, thermisch, optisch und chemisch stabil und zeitlich recht beständig. Auch Laserinnengravuren können mit sehr hoher Präzision hergestellt werden. Schließlich sind solche Glasinnengravuren gegen äußere Einflüsse geschützt und beständig.

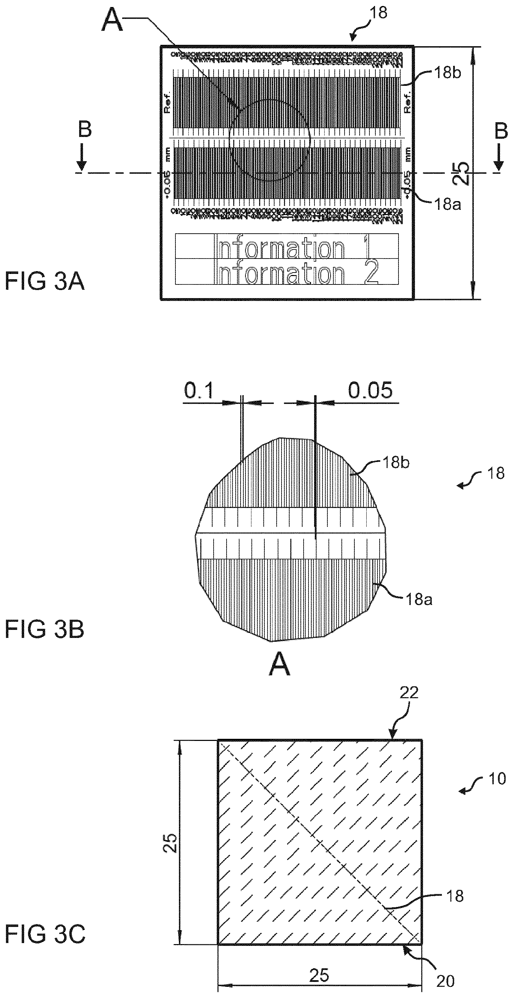

Fig. 3A bis Fig. 3C zeigen die Ausgestaltung einer beispielhaften Messskala 18, wie sie beispielsweise in einer würfelförmigen Messvorrichtung verwendet werden kann. Dabei zeigt Fig. 3A eine Parallelprojektion der Messskala in einer Richtung entlang der Messachse, also die Ansicht der Messskala, die aus der Richtung des optischen Aufbaus dem Grund nach beobachtbar ist. In dieser bevorzugten Ausführungsform umfasst die Messskala sogar zwei (im Wesentlichen parallel verlaufende) Teilskalen 18a und 18b. Es ist in einer Ausführungsform denkbar, dass die beiden Teilskalen in der Messposition der Messvorrichtung vom optischen Aufbau gleichzeitig erfasst werden können. Alternativ oder zusätzlich ist es auch möglich, dass die Messvorrichtung derart senkrecht zur optischen Achse des optischen Aufbaus verschoben wird, dass selektiv eine der beiden Messkalen zum Bestimmen der Schärfentiefe erfasst wird.

Fig. 3B zeigt einen vergrößerten Ausschnitt der Messskala 18 aus Fig. 3A im dort markierten Bereich A. Die beiden Teilskalen 18a, 18b verlaufen parallel zueinander und parallel zur Skalenlinie. Die gesamte Messskala 18 liegt dabei im Wesentlichen in einer Ebene, die als Raumdiagonale verläuft, wie dies in Fig. 3C als Schnitt durch den Vorrichtungskörper (als Würfel) entlang der Linie B-B aus Fig. 3A dargestellt ist. Als Skalenlinie kann in diesem Fall jede Linie verstanden werden, die entlang der Steigung dieser Ebene verläuft. Entlang solcher Skalenlinien markieren die Teilskalen periodische Abstände, welche in der Projektion von Fig. 3B mit "0.1" bezeichnet sind. Jedenfalls bei einer gerade verlaufenden Skalenlinie wie in diesem Fall repräsentiert die Periodizität der Markierungen entlang der Skalenlinie auch eine Periodizität dieser Markierungen hinsichtlich ihrer jeweiligen Position in Richtung parallel zur Messachse - und damit in der Messposition parallel zur optischen Achse des optischen Aufbaus. Außerdem lassen sich die Markierungen auch im Bildfeld des optischen Aufbaus zumindest dann erkennen und unterscheiden, wenn sie sich im Schärfebereich des optischen Aufbaus befinden. Somit lassen sich im Bildfeld des optischen Aufbaus die Grenzen des Schärfebereichs als die äußersten gerade noch (ausreichend) scharf abgebildeten Markierungen ermitteln. Durch die Periodizität der Abstände der Markierungen kann somit sehr einfach die gesamte Größe des Schärfebereichs, also ein Maß der Schärfentiefe abgezählt oder direkt abgelesen werden. Das direkte Ablesen wird vorzugsweise dadurch unterstützt und vereinfacht, dass die Markierungen (mit Zahlen) beschriftet werden. In der Darstellung von Fig. 3B sind beispielsweise die beiden Teilskalen um die Hälfte Ihrer periodischen Abstände gegeneinander verschoben, um die Auflösung der gesamten Messskala 18 zu verbessern.

Die Messskala wird somit derart entlang der Skalenlinie bzw. Messstrecke eingebracht, dass sie diagonal verläuft und eine optische Messung der Schärfentiefe sowohl für Auflicht- als auch für Durchlichtaufbauten zulässt. Die Messskala kann so angepasst und beschriftet werden, dass die Schärfentiefe direkt abgelesen werden kann. Dies ist vergleichbar zum Abmessen eines Längenmaßes. Eine Umrechnung mittels Winkeln aufgrund von möglichen Projektionen entfällt somit.

Mit Hilfe der zuvor beschriebenen Gleichungen (1) - (4) kann analytisch die Schärfentiefe in Luft berechnet werden. Unter Zuhilfenahme des snelliusschen Brechungsgesetztes in Gleichung (5) kann zusätzlich der Einfluss durch das Einbringen eines Mediums mit Brechungsindex $n_2$ in das umgebende Medium ($n_1$) auf die Position der Fokalebene und des vorderen und hinteren Fokuspunkts (Gleichungen (2) und (3)) beschrieben werden. Hier repräsentiert $\alpha$ den Einfalls- und Ausfallswinkel der Lichtstrahlen in das Medium.

$$n_1 \sin(\alpha_1) = n_2 \sin(\alpha_2) \qquad\qquad (6)$$

Das umgebende Medium ist vorzugsweise als Luft zu wählen, kann aber auch in Abhängigkeit von der konkreten Anwendung eine Immersionsflüssigkeit oder ein anderes Gas sein. Die relative Verschiebung der Fokalebene, bedingt durch das Einbringen eines Mediums mit einem Brechungsindex $n_2$ verschieden zum Umgebungsmedium ($n_1$) kann analytische zu folgendem Verhältnis hergeleitet werden:

$$\frac{\Delta d}{d} = \frac{\tan(\alpha_1)\sqrt{1-\left(\frac{n_1}{n_2}\sin(\alpha_1)\right)^2}}{\frac{n_1}{n_2}\sin(\alpha_1)} - 1 \qquad\qquad (7)$$

Hierbei entspricht d dem Abstand der Fokalebene zur effektiven Linsen- bzw. Objektivebene und $\alpha_1$ entspricht dem Einfallswinkel der Strahlen beim optischen Übergang von Umgebungsmedium in das skalatragende Medium. Unter Verwendung der numerischen Apertur für das Umgebungsmedium (Index 1), definiert in Gleichung (8), kann Gleichung (7) umgeformt werden, sodass mit Gleichung (9) die relative Verschiebung der Fokalebene in Abhängigkeit der Brechungsindizes und der numerischen Apertur berechnet werden kann.

$$A_{N,1} = n_1 \sin(\alpha_1) \qquad\qquad (8)$$

$$\frac{\Delta d}{d} = \frac{n_2}{n_1}\frac{\sqrt{1-\left(\frac{A_{N,1}}{n_2}\right)^2}}{\sqrt{1-\left(\frac{A_{N,1}}{n_1}\right)^2}} - 1 \qquad\qquad (9)$$

Hierbei ist aufgrund der Winkelbeziehungen der Einfallswinkel $\alpha_1$ gleich dem halben Öffnungswinkel, welcher in Gleichung (8) verwendet wird. Es kann mit Hilfe der Gleichung (9) gezeigt werden, dass sich die Fokalebene für den Fall $n_2 > n_1$ nach hinten bzw. weg vom Objektiv verschiebt. Dieses Verhalten gilt analog für den vorderen und hinteren Schärfepunkt bzw. die vordere und hintere Schärfegrenze, welche(r) insbesondere durch die einhüllenden Strahlen definiert werden. Unter Verwendung der entsprechenden Winkel in Gleichung (9) kann somit die exakte Position der Schärfentiefe berechnet werden.

Es kann davon ausgegangen werden, dass sich die Schärfentiefe in gleichem Maße abhängig vom Brechungsindex verhält wie dies für die Verschiebung des Fokuspunktes in Gleichung (8) angegeben ist. Die Skala zur Bestimmung der Schärfentiefe kann somit nach zwei Kriterien definiert werden. Es kann als universell gültige Skala definiert werden, bei der die Werte der Schärfentiefe abgelesen werden können. Durch das Einsetzen der abgelesenen Werte in Gleichung (7) bzw. (9) kann die exakte Schärfentiefe berechnet werden.

Alternativ und besonders bevorzugt kann die Messvorrichtung und Skala für eine bestimmte Messaufgabe mit Gleichung (7) bzw. (9) genau ausgelegt werden. Die Skala enthält dann bereits absolute Werte der Schärfentiefe, sodass beim Ablesen direkt die passenden Längenmaße bestimmt werden können. Ein Beispiel hierfür ist insbesondere in Gleichung (5) dargestellt. So werden beispielsweise bei Verwendung eines Mediums mit dem Brechungsindex $n_2 = 1,5$ Markierungen der Messskale, welche ein Maß für eine Schärfentiefe von 1mm repräsentieren im Falle eines Skalenwinkels von 45° vorzugsweise in einem geometrischen Abstand von etwa 2,1 mm zueinander angebracht.

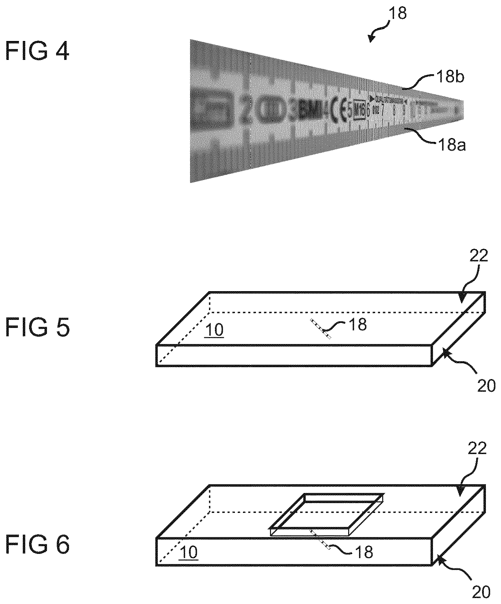

Die mögliche optische Abbildung einer beispielhaften Messskala, wie sie in einer erfindungsgemäßen Messvorrichtung verwendet werden könnte, ist in Fig. 4 dargestellt. Dabei umfasst die Messskala in diesem Beispiel wiederum zwei Teilskalen, von denen jeder Skalenabschnitt als Markierungen periodischer Abstände insbesondere kürzere und längere Linien. So können beispielsweise die längeren, mit Ziffern versehenen Linien als Repräsentanten für Position mit gegenseitigen axialen Abständen von 1 mm verstanden werden. Die dazwischen liegenden kürzeren Linien könnten Position mit gegenseitigen axialen Abständen von 0,1 mm in der einen Teilskala und 0,05 mm in der anderen Teilskala darstellen. Durch die Markierung mit Zahlen wird ein Abzählen bzw. Messen nochmals vereinfacht.

Insbesondere ist in Fig. 4 erkennbar, dass ein zentraler Bereich der Messskala, nämlich derjenige, der sich im Objektraum nahe der Fokalebene befindet, in der Bildfläche scharf dargestellt wird. Mit zunehmendem Abstand vom schärfsten Punkt liegt die Messskala immer weiter weg von der Fokalebene und durchläuft die Grenzen des Schärfebereichs. Diese Grenzen und deren Abstand zueinander sind ohne mechanische Verschiebung der Messvorrichtung nach einmaliger Positionierung auf einen Blick oder in einer einzigen Bildaufnahme der Messskala durch den optischen Aufbau ablesbar.

Wie bereits erwähnt, stellt Fig. 3C eine Schnittansicht durch den Vorrichtungskörper dar. Darin sind beispielhaften Seitenlängen von 25 mm eines entsprechenden Würfels angedeutet. Besonders bevorzugt liegt die Seitenlänge des Vorrichtungskörpers, insbesondere im Falle einer Würfelform, im Bereich von etwa 5 mm bis etwa 40 mm. In dieser Größe ist der Vorrichtungskörper ausreichend groß, um ihn gut manuell handhaben zu könnten und klein genug für viele Anwendungen.

Gerade für Anwendungen im Bereich der Mikroskopie mit hohen Vergrößerungen und sehr kurzen Brennweiten und Fokusabständen ist es aber auch wünschenswert, kleinere bzw. dünnere Messvorrichtungen nutzen zu können. Beispielhafte Varianten solcher Messvorrichtungen für Mikroskope mit hoher Vergrößerung sind in Fig. 5 und Fig. 6 dargestellt. So ist der Vorrichtungskörper in diesen bevorzugten Ausführungsformen insbesondere in Form eines Objektträgerplättchens ausgebildet. Es ist sogar besonders bevorzugt den Vorrichtungskörper auch der Größe und dem Material nach gemäß standardisierter Objektträgerplättchen auszubilden. Es ist sogar möglich als Vorrichtungskörper direkt solche bereits vorhandenen Objektträgerplättchen einzusetzen und sie beispielsweise durch Laserinnengravur mit einer entsprechenden Messskala zu versehen, die bei Auflegen des Vorrichtungskörpers auf ein Objektträgereinrichtung eines Mikroskops dann unter einem Winkel von mehr als 0° und weniger als 90° besonders bevorzugt im Bereich zwischen etwa 30° und etwa 60° relativ zur optischen Achse des Mikroskopobjektivs verläuft und direkt durch das Mikroskop abgelesen werden kann. Solche Messvorrichtungen in der Dimension von Objektträgerplättchen lassen sich einerseits sehr gut handhaben sind regelmäßig hochgradig kompatibel mit an vielen Mikroskop vorhandenen Halterungen für Objektträgerplättchen und sind besonders gut für optische Aufbauten mit sehr kurzen Brennweiten geeignet.

Die besondere Ausführungsform von Fig. 6 weist in einem zentralen Bereich der Lichtaustrittsfläche 22 sogar noch eine Vertiefung zur Aufnahme einer Immersionsflüssigkeit auf. Die Messskala ist dabei vorzugsweise zwischen dieser Vertiefung und der gegenüberliegenden Grundfläche 20 angeordnet. Damit ist diese Ausführungsform auch unmittelbar für Immersionsmikroskopie anwendbar indem die Vertiefung mit einer Immersionsflüssigkeit gefüllt wird.

Mit dem erfindungsgemäßen Vorgehen kann die Schärfentiefe mit besonders hoher Genauigkeit und Reproduzierbarkeit und mit geringem Aufwand ermittelt werden. So können beispielsweise Glaskörper als Vorrichtungskörper und damit als Träger der Messskala mit hoher Genauigkeit gefertigt werden. Auch die insbesondere lasergestützte (holografische) Einbringung der Messskale ist mit sehr hoher Genauigkeit möglich. Insgesamt sind damit Fertigungstoleranzen möglich, die unterhalb der Auflösungsgrenzen der zu kalibrierenden Messeinrichtungen liegen. Gleichzeitig können die erfindungsgemäßen Messvorrichtungen sehr kostengünstig gefertigt werden. Aufgrund der verwendbaren Lasertechnik ist eine nahezu freie Größenskalierung möglich, sodass Kalibrier- und Messvorrichtungen in einem Größenmaßstab von wenigen hundert Mikrometern bis zu mehreren Zentimetern gefertigt werden können. Hochwertig gefertigte Glaskörper (z.B. Quader oder Würfel) weisen zudem eine sehr hohen Kanten- und Flächenparallelität auf.

Außerdem besitzt die Messskala (Kalibriermuster) einen bekannten und sehr präzise gefertigten Winkel, sodass Winkel- und Abstandsfehler bei guter Platzierung der Messvorrichtung in der Messstrecke praktisch ausgeschlossen bzw. vernachlässigbar sind.

Zum besseren Verständnis der Möglichkeit ein Kalibriermuster bzw. eine Messskala in einen festen Musterträger einzubetten, wird nachfolgend weiter alternativ hierzu eher allgemein die 3-dimensionale bzw. holografische Einbringung eines charakteristischen Kalibrier- und Messmusters beschrieben, zum Beispiel ein (Längen-) Maßstab und ggf. weitere, aus der Bildverarbeitung gängige Muster (Siemensstern, Linienpaare, etc.), in einen Messraum bzw. Objektraum, welcher von einem optischen Aufbau erfasst wird.

Dies kann beispielsweise auch die Einbringung einer Lichtprojektion (bzw. Hologramm) in Rauch, Flüssigkeitsnebel erreicht werden. Gerade bei Anwendung eines solchen Verfahrens ist bevorzugt kein fester Musterträger erforderlich. Dies ist besonders dann sehr nützlich, wenn der Objektraum (Messraum) räumlich sehr begrenzt oder aufgrund der Natur der Messung, die dort vorgenommen werden soll, für die Anordnung oder gar Befestigung eines bemusterten Vorrichtungskörpers sehr schlecht zugänglich ist.

Für Hologramme bzw. 3D-Lichtprojektionen in Flüssigkeitsnebel, Rauch oder Ähnlichem ist die Anordnung ansonsten analog zu betrachten. Bei einer solchen Einbringung des Musters ergeben sich auch analoge Vorteile wie bei Verwendung einer erfindungsgemäßen Messvorrichtung. Mittels eines einfachen Bildes kann sofort, ohne Verfahren von Probenträger oder Kamera eine Messung der Schärfentiefe durchgeführt werden. Aufgrund der verwendeten Licht- bzw. Lasertechnik ist auch bei einer Projektion in Rauch, Flüssigkeitsnebel, oder Ähnlichem eine nahezu freie Größenskalierung möglich. Somit kann eine optische Vergrößerungsanordnung (z.B. für Mikrokanalströmungen) genauso kalibriert und vermessen werden, wie eine optische Verkleinerungsanordnung (z.B. für Tropfenexperimente).

Bevorzugte Anwendungsbereiche für ein Messverfahren zum Bestimmen einer Schärfentiefe eines optischen Aufbaus durch Projizieren einer Messskala in ein optisch streuendes Medium sind beispielsweise Druckkammern, in denen ein Spray vermessen werden soll. Bei gewissen Messungen wird die Abweichung der Partikel zur Fokalebene verwendet, um die Position von Partikeln in der Tiefe zu bestimmen. Daher ist für solche Messungen eine genaue Kenntnis der Schärfentiefe ganz entscheidend. Mit dem Verfahren kann beispielsweise beim Wechsel der Optik bzw. einer Änderung des optischen Aufbaus sehr leicht und schnell (vor allem ohne Öffnen der Druckkammer) die Schärfentiefe neu vermessen werden. Dabei kann insbesondere das bereits in der Druckkammer vorhandene Spray als optisch streuendes Medium verwendet werden. Durch ein optisches Fenster in der Druckkammer kann durch Lichtprojektion die Messskala so in die Druckkammer projiziert werden, dass der optische Aufbau aufgrund der Lichtstreuung durch das optisch streuende Medium diese Messskala erfassen kann.

Weitere besonders bevorzugte Einsatzgebiete für ein Verfahren betrifft PIV-Messungen (particle image velocimetry) bzw. Messungen von Strömungen in Kanälen. Gerade in vielen Messkonstellation zur Strömungsmessung ist es entweder aufgrund der inneren Geometrie der Strömungsanordnungen oder aufgrund der äußeren geometrischen Randbedingungen sehr schwierig oder gar nicht möglich mit einem verschiebbaren Kalibriermuster eine Messung der Schärfentiefe vorzunehmen. So ist es schon schwierig oder kaum möglich, das Kalibriermuster überhaupt in die richtige Position im Bereich der Fokalebene zu bringen. Dieses danach auch noch kontrolliert entlang der optischen Achse zu verschieben, um die Schärfengrenzen zu vermessen, ist erst recht schwierig oder nur mit großen Ungenauigkeiten möglich.

In technischen Anlagen und auch in wissenschaftlichen Untersuchungen werden sehr oft Rohrströmungen unterschiedlichster Art vermessen. Hier kommen oft Messtechniken wie PIV, Schattenaufnahmen oder Schlieren zum Einsatz. Als besonders herausforderndes Beispiel soll die Vermessung eines runden, konischen Wirbelrohrs aus Plexiglas sein. Aufgrund des sich konisch öffnenden Innendurchmessers, ist die Wandstärke lokal unterschiedlich. Für die Messung beleuchtet ein LASER-Schnitt durch das Rohr die zu vermessende Ebene. Die Ebene des LASER- Schnitts kann hierbei beliebig verschoben werden. Eine, bzw. zwei Kameras mit entsprechender Optik nehmen die notwendigen Bilder auf. Das Problem für eine Vermessung der Schärfentiefe der Kamera(s) in dieser Anwendung liegt dabei in der Zugänglichkeit in das Wirbelrohr. So ist das Rohr typischerweise ein komplettes, nicht zu öffnendes (Plexiglas-)Rohr mit Abmessungen von beispielsweise ca. 5-15cm für den Durchmesser und einer Länge von 1,5 m.

Kommerziell sind Kalibrierplatten für solche Rohre üblicherweise nur als Spezialanfertigungen erhältlich. Der Aufwand und damit die Kosten einer individuellen Anfertigung von Kalibrierplatten sind aufgrund der Genauigkeitsanforderungen extrem hoch. Außerdem ist die Halterung der Kalibrierplatten in der Mitte des Rohres sehr herausfordernd und eine präzise Einstellung der Position zudem nahezu unmöglich.

Gerade unter solchen Konditionen kann das Verfahren durch Lichtprojektion einer Messskala in der Messraum sein Potential ausspielen. Aber selbst die Verwendung einer erfindungsgemäßen Messvorrichtung kann in diesem Fall bereits wesentliche Vorteile bringen, da hier während der Vermessung der Schärfentiefe keine kontrollierte mechanische Verschiebung eines Kalibriermusters vorgenommen werden muss. Die Messvorrichtung muss nur einmal positioniert werden. Dazu kann der Vorrichtungskörper auch an die Innenform des Rohres angepasst sein.

Im Folgenden werden noch Fehlergrenzen und deren mögliche Reduktion diskutiert. Insbesondere setzt sich der Fehler der Messvorrichtung zusammen aus den geometrischen Fehlern, erzeugt durch Unzulänglichkeiten des Vorrichtungskörper (z.B. Glaskörper) als Musterträger und den als Messskala eingebrachten Mustern entlang der Skalenlinie. Dazu gehört insbesondere der geometrische Fehler aufgrund nicht perfekter Form des Vorrichtungskörpers am Beispiel eines Glaswürfels als Musterträger. Folgende Einflussgrößen spielen dabei eine Rolle:

- Oberflächenplanheit: typische Werte: $\pm 0{,}08\mu m$
- Oberflächenparallelität: hier sind ebenfalls sehr hohe Genauigkeiten erreichbar.

Als hilfsweise Betrachtung kann zum Vergleich hier die Angaben zur Strahlabweichung bei Strahlteilerwürfeln dienen. Dies ist eine weitaus schwierigere Fertigung, da eine geklebte Grenzfläche zwischen zwei zu einem Würfel angeordneten Prismen vorhanden ist. Der typische Wert für die Abweichung des orthogonalen Laserstrahls werden hier mit $<\pm 5$ arcmin angenommen.

Sollte das Muster nicht durch einen Glaskörper getragen werden, sondern alleine durch eine Projektion, z.B. in Rauch, eingebracht werden, so sind die Genauigkeiten des projizierenden Mustergenerators zu berücksichtigen. Hier kann keine Abschätzung pauschal gegeben werden. Durch mechanisch hochwertige Konstruktionen sind aber auch diese Toleranzen äußerst klein.

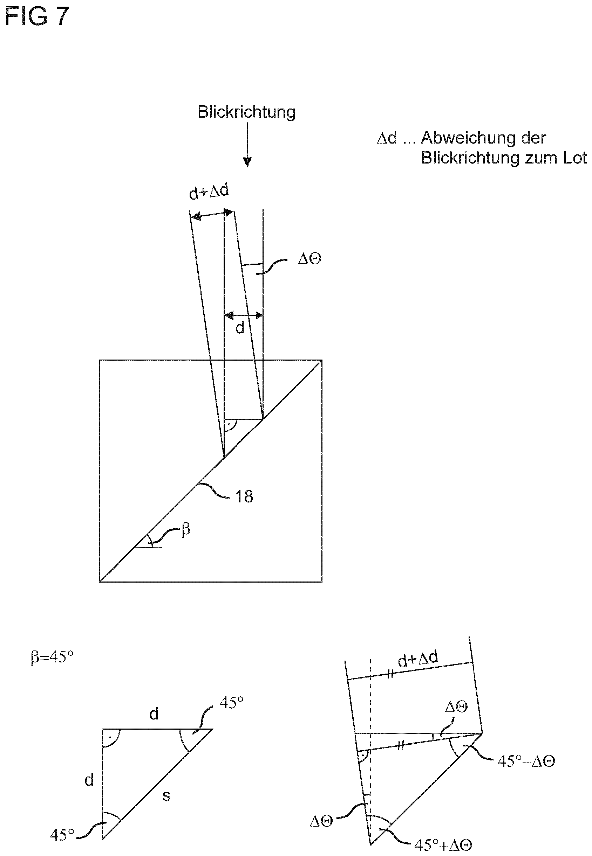

In Fig. 7 veranschaulicht die Fehlerrechnung aufgrund von Winkelfehlern bei der Betrachtung der Muster. Hierbei wird eine ggf. vorhandene Brechung des nicht orthogonalen Lichtstrahls an der Grenzfläche des Musterträgers aufgrund der zu erwartenden sehr kleinen Winkel von deutlich unterhalb eines Grads ( $\Delta\theta \ll 1°$ ) vernachlässigt. Es ergibt sich der Sachverhalt:

$$\frac{d + \Delta d}{d} = \frac{\sin(\beta + \Delta\theta)}{\sin\beta}$$

mit $\beta = 90° - \varphi$ als Musterwinkel, vorzugsweise $\beta = 45°$, und dem Winkelfehler $\Delta\theta$. Exemplarisch sind die Fehler bei einer Winkelabweichung zwischen -1° und +1° in der folgenden Tabelle zusammengefasst (für $\beta = 45°$).

| $\Delta\theta$ | -1° | -0,5° | -5' | 0° | +5' | 0,5° | 1° |
|---|---|---|---|---|---|---|---|
| $\dfrac{d + \Delta d}{d}$ | -1,76% | -0,88% | -0,15% | 0% | +0,15% | +0,87% | 1,73% |

Für mögliche Musterfehler aufgrund nicht perfekter Einbringung des Musters gilt folgendes: Die Einbringung des Musters in die Messstrecke erfolgt vorzugsweise, indem Glas mittels eines LASERS von innen graviert wird. Jedoch kann das Muster auch als Projektion in Nebel oder Spray eingebracht werden. Bei beiden ist der Punktdurchmesser und die Auflösung des Punktegitters in Relation zur Dimension der Messstrecke maßgeblich.

Für die Einbringung in einen Glaskörper ergibt ein Vergleich von repräsentativen Angaben zu verfügbaren Anlagen verschiedener Hersteller (CERION laser GmbH und Wisely Laser Machinery Limited):

| | Cerion C-professional | WLASER Crystal/Glass Engraving Machine 3D Laser (4KB) |
|---|---|---|
| Minimale Punktgröße: | $20\mu m$ | $20\mu m$ |
| Wiederholgenauigkeit: | $30\mu m$ | $30\mu m$ |
| Auflösung: | Keine Angaben | 800-1200 dpi |

Es kann also von einer Punktgröße von $20\mu m$ und einer Auflösung von 800-1200 dpi ausgegangen werden. Dies entspricht somit pro Millimeter ca. 30-45 Punkten. Bei der geringeren Auflösung von 800dpi ist damit von einem maximalen Fehler von $\pm 32\mu m$ auszugehen. Bei einer Auflösung von 1200 dpi entspricht dies lediglich $\pm 21\ \mu m$. Ein solcher Fehler bei der Bestimmung der Schärfentiefe ist für die meisten messtechnischen Aufgaben vollkommen ausreichend. Als Beispiel: Bei einer Tiefenschärfe von etwa $500\mu m$, wie es der Messaufbau eines beispielhaften Tropfenprüfstandes mit sehr hoher optischer Vergrößerung hat, beträgt der Fehler 4,2 %. Andere, häufiger verwendete Prüfstände haben größere Schärfentiefen, z.B. im Bereich von 25 mm, sodass der Fehler nur 0,084% beträgt. Bei den experimentellen Prüfständen für Wärmeübertragungsversuche sind Schärfentiefen von mehreren Zentimetern ebenfalls üblich. Zusätzlich zu den kommerziell verfügbaren Anlagen konnten im akademischen Bereich bereits Kavitäten im Glas erzeugt werden, die einen Abstand von lediglich 6 $\mu m$ haben, was den Fehler daher noch deutlich verringern kann.

Bei holographischer Einbringung mittels eines Beamers oder ähnlicher Geräte sind die Betrachtungen hier analog und daher abhängig von der Pixel-Noxelgröße und der DPI-Auflösung des mustererzeugenden Generators. Der Gesamtfehler wird insbesondere von der Einbringung des Musters in die Messstrecke bzw. den Objektraum dominiert. Hierbei können die Fehler beispielsweise im Bereich von bis zu etwa $\pm$ 30 $\mu$m liegen, was für die Messung der Schärfentiefe vollkommen ausreichend ist. Andere Maßnahmen zur Ermittlung der Schärfentiefe weisen bei vergleichbarem Aufwand deutlich höhere Fehler auf, zum Beispiel bei Verwendung eines Metermaßstabs (ca. eine Teilungseinheit des Maßstabs, z.B. $\pm$500 $\mu$m). In diesem Fall ist eine Messung der Schärfentiefe nicht möglich, da der Fehler die gleiche Größenordnung hat wie die Schärfentiefe selbst.

**Bezugszeichenliste**

| | |
|---|---|
| 10 | Messvorrichtung |
| 12 | Vorrichtungskörper, Block |
| 14 | Messachse |
| 16 | Skalenlinie |
| 18 | Messskala |
| 20 | Grundfläche |
| 22 | Lichtaustrittsfläche |
| 100 | optischer Aufbau |
| 102 | optische Achse |
| 104 | Objektive |
| 106 | Objektträgereinrichtung |
| 108 | konventionelles Kalibriermuster |

**Patentansprüche**

1. Messvorrichtung (10) zum Bestimmen einer Schärfentiefe eines optischen Aufbaus (100), umfassend einen Vorrichtungskörper (12) mit einer Messachse (14), wobei der Vorrichtungskörper (12) so gebildet ist, dass er in einer Messposition standfest auf einer Ablageebene des optischen Aufbaus derart abstellbar ist, dass dabei die Messachse (14) des Vorrichtungskörpers (12) mit einer optischen Achse des optischen Aufbaus zusammenfällt, und

   wobei der Vorrichtungskörper (12) eine entlang einer Skalenlinie (16) aufgetragene Messskala (18) derart aufweist, dass die Skalenlinie (16) mit der Richtung der Messachse (14) einen Skalenwinkel $\varphi$ größer als 0° und kleiner als 90° einschließt und die Messskala (18) in der Messposition des Vorrichtungskörper (12) durch den optischen Aufbau (100) für die Bestimmung der Schärfentiefe optisch erfassbar ist, wobei
   der Vorrichtungskörper (12) einen optisch transparenten Block umfasst, in dessen Inneren die Messskala (18) ausgebildet ist,der optisch transparente Block als ein Prisma gebildet ist und/oder als Objektträger ausgebildet ist,
   die Skalenlinie (16) entlang einer Gerade verläuft, welche mit einer Normalenrichtung zu einer Grundfläche (20) des transparenten Blocks den Skalenwinkel $\varphi$ einschließt, **dadurch gekennzeichnet, dass**
   die Messskala (18) bei einem optischen Brechungsindex n des optisch transparenten Blocks periodische Abstände d entlang der Skalenlinie (16) gemäß

$$d = n 10^{-m} L / \cos \varphi$$

   mit einer ganzen Zahl m als dekadische Vielfache einer standardisierten Längeneinheit L markiert, wobei die Längeneinheit 1 Meter gemäß dem internationalen Einheitensystem SI beträgt.

2. Messvorrichtung (10) nach Anspruch 1, wobei der optisch transparente Block im Wesentlichen aus Glas gebildet ist.

3. Messvorrichtung (10) nach Anspruch 1 oder 2, wobei der optisch transparente Block als ein gerades, insbesondere vierseitiges Prisma, besonders bevorzugt als Würfel gebildet ist.

4. Messvorrichtung (10) nach einem der vorangegangenen Ansprüche, wobei der optisch transparente Block als Objektmikrometer ausgebildet ist.

5. Messvorrichtung (10) nach einem der vorangegangenen Ansprüche, wobei der Skalenwinkel $\varphi$ in einem Bereich von etwa 30° bis etwa 60°, besonders bevorzugt in einem Bereich von etwa 40° bis etwa 50°, am meisten bevorzugt bei etwa 45° liegt.

6. Messvorrichtung (10) nach einem der vorangegangenen Ansprüche, wobei die Messskala (18) als Laserinnengravur gebildet ist.

**Claims**

1. Measuring device (10) for determining a depth of focus of an optical structure (100), comprising a device body (12) with a measurement axis (14), wherein the device body (12) is designed such that it can be placed stably in a measurement position on a support plane of the optical structure in such a way such that the measurement axis (14) of the device body (12) coincides with an optical axis of the optical structure, and

   wherein the device body (12) has a measurement scale (18) applied along a scale line (16) such that the scale line (16) forms a scale angle $\varphi$ greater than 0° and less than 90° with the direction of the measurement axis (14) and the measurement scale (18) is optically detectable through the optical structure (100) in the measurement position of the device body (12) for determining the depth of focus, wherein
   the device body (12) comprises an optically transparent block, inside which the measurement scale (18) is formed, the optically transparent block is formed as a prism and/or is designed as a specimen slide,
   the scale line (16) runs along a straight line which, with a normal direction to a base surface (20) of the transparent block, encloses the scale angle $\varphi$, **characterized in that**
   the measurement scale (18), at an optical refractive index n of the optically transparent block, marks periodic intervals d along the scale line (16) according to

$$d = n10^{-m}L/\cos\varphi$$

   with an integer $m$ as decimal multiples of a standardized unit of length $L$, wherein the unit of length is 1 meter according to the international system of units SI.

2. Measuring device (10) according to claim 1, wherein the optically transparent block is formed substantially of glass.

3. Measuring device (10) according to claim 1 or 2, wherein the optically transparent block is formed as a straight, in particular four-sided prism, particularly preferable as a cube.

4. Measuring device (10) according to any one of the preceding claims, wherein the optically transparent block is formed as a specimen micrometer.

5. Measuring device (10) according to any one of the preceding claims, wherein the scale angle $\varphi$ is in a range of about 30° to about 60°, particularly preferable in a range of about 40° to about 50°, in particular at about 45°.

6. Measuring device (10) according to any one of the preceding claims, wherein the measurement scale (18) is formed as an inner laser engraving.

**Revendications**

1. Dispositif de mesure (10) pour déterminer une profondeur de champ d'une structure optique (100), comprenant un corps de dispositif (12) avec un axe de mesure (14), le corps de dispositif (12) étant formé de telle sorte que, dans une position de mesure, il peut être placé de manière stable sur un plan de dépôt de la structure optique de telle sorte que l'axe de mesure (14) du corps de dispositif (12) coïncide avec un axe optique de la structure optique, et

   le corps de dispositif (12) présentant une échelle de mesure (18) appliquée le long d'une ligne d'échelle (16) de telle sorte que la ligne d'échelle (16) forme avec la direction de l'axe de mesure (14) un angle d'échelle $\varphi$ supérieur à 0° et inférieur à 90° et l'échelle de mesure (18) peut être détectée optiquement dans la position de mesure du corps de dispositif (12) par la structure optique (100) pour la détermination de la profondeur de champ,
   le corps de dispositif (12) comprenant un bloc optiquement transparent, à l'intérieur duquel est réalisée l'échelle de mesure (18), le bloc optiquement transparent (15) étant formé comme un prisme et/ou étant réalisé comme porte-objet,

la ligne d'échelle (16) s'étendant le long d'une ligne droite qui, avec une direction normale à une surface de base (20) du bloc transparent, forme l'angle d'échelle φ, **caractérisé en ce que**

l'échelle de mesure (18) marque, pour un indice de réfraction optique n du bloc optiquement transparent, des distances périodiques d le long de la ligne d'échelle (16) selon

$$d = n \ 10^{-m} \ L \ / \cos \varphi$$

avec un nombre entier m comme multiples décimaux d'une unité de longueur standardisée L, l'unité de longueur étant de 1 mètre selon le système international d'unités SI.

2. Dispositif de mesure (10) selon la revendication 1, dans lequel le bloc optiquement transparent est essentiellement formé de verre.

3. Dispositif de mesure (10) selon la revendication 1 ou 2, dans lequel le bloc optiquement transparent est formé comme un prisme droit, notamment à quatre côtés, de manière particulièrement préférée comme un cube.

4. Dispositif de mesure (10) selon l'une quelconque des revendications précédentes, dans lequel le bloc optiquement transparent est réalisé comme micromètre d'étalonnage.

5. Dispositif de mesure (10) selon l'une quelconque des revendications précédentes, dans lequel l'angle d'échelle φ se situe dans une plage d'environ 30° à environ 60°, de manière particulièrement préférée dans une plage d'environ 40° à environ 50°, de manière préférée entre toutes d'environ 45°.

6. Dispositif de mesure (10) selon l'une quelconque des revendications précédentes, dans lequel l'échelle de mesure (18) est formée comme gravure intérieure au laser.

FIG 1A

FIG 1B

FIG 2

FIG 3A

FIG 3B

FIG 3C

FIG 4

FIG 5

FIG 6

## FIG 7

Blickrichtung

Δd ... Abweichung der
Blickrichtung zum Lot

d+Δd

ΔΘ

d

18

β

β=45°

d

45°

d

s

45°

d+Δd

ΔΘ

45°−ΔΘ

ΔΘ

45°+ΔΘ

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007279621 A1